(19) Europäisches Patentamt
European Patent Office
Office européen des brevets

(11) **EP 2 239 019 B1**

(12) **EUROPEAN PATENT SPECIFICATION**

(45) Date of publication and mention
of the grant of the patent:
**20.12.2017 Bulletin 2017/51**

(51) Int Cl.:
***A62C 37/50*** *(2006.01)*    ***A62C 5/02*** *(2006.01)*
***G01N 21/59*** *(2006.01)*

(21) Application number: **10250752.2**

(22) Date of filing: **09.04.2010**

(54) **Measurement system for powder based agents**

Messsystem für Mittel auf Pulverbasis

Système de mesure pour agents en poudre

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **09.04.2009 US 420940**

(43) Date of publication of application:
**13.10.2010 Bulletin 2010/41**

(73) Proprietor: **Kidde Technologies, Inc.
Wilson, NC 27896 (US)**

(72) Inventor: **Ayers, Scott
Wilson, NC 27896 (US)**

(74) Representative: **Taylor, Adam David
Dehns
St Bride's House
10 Salisbury Square
London EC4Y 8JD (GB)**

(56) References cited:
**JP-A- 2008 017 976**

• **SKAGGS R R ET AL: "Diode Laser Measurements
of HF Concentrations From Heptane/Air Pan Fires
Extinguished by FE-36, FM-200, FE-36 Plus APP,
or FM-200 Plus APP" APPLIED SPECTROSCOPY,
vol. 53, no. 9, 1999, pages 1143-1148,
XP002590328**
• **GANN R G: "Executive Summary"[Online] vol. 1,
1995, pages 1-4, XP002590329 NIST SPECIAL
PUBLICATION 890 Retrieved from the Internet:
URL:http://fire.nist.gov/bfrlpubs/fire95/P
DF/f95059.pdf> [retrieved on 2010-07-07]**
• **SHEINSON R S AND FLEMING J W: "Final
Technical Report: Suppression effectiveness of
aerosols"[Online] 1 October 2003 (2003-10-01),
XP002590330 NIST, Project NGP 2b1 Retrieved
from the Internet:
URL:http://www.bfrl.nist.gov/866/NGP/pubs/
141_NGP_2b1_Final_Technical_Report.pdf>
[retrieved on 2010-07-07]**

EP 2 239 019 B1

## Description

### BACKGROUND

The present disclosure relates to a measurement system for the measurement of dry powder based agents.

In order to certify a dry powder fire suppression system onboard a vehicle such as an aircraft, the agent is discharged into the protected volume and an analyzer simultaneously records the amount of fire extinguishing agent in various zones of the protected volume. The amount of agent must be above some predetermined level which has been established as sufficient to extinguish all possible fires for some period of time simultaneously in all zones.

The analyzer must be calibrated and traceable such that analyzer output proves the dry powder fire suppression system is capable of extinguishing any fire within the protected space. No known systems are capable of both measuring aerosol cloud fire extinguishing agent concentrations and being calibrated so as to measure the agent concentration for an aircraft dry powder fire suppression system certification test.

A sensor system is disclosed by Skaggs, R.R., et al in Applied Spectroscopy vol 53/9, 1999, pages 1143-1148. Skaggs, R.R. *et al* disclose a calibration system for a dry powder agent comprising a $1.5m^3$ cubic test facility. A handheld bottle-type extinguisher is situated on top of cubic container, attached via a spray nozzle protruding into the cubic container. Situated within the cubic container is a near-infrared tunable diode laser absorbtion spectroscopy apparatus.

In NITS SP 890, vol 1, iii-vi pp, 1995, Gann, R.G. discloses a further example of the use of near-infrared absorbtion to measure the concentration of a dry powder agent in simulated engine nacelle fire conditions.

In the document 'Final Technical Report: Suppression effectiveness of aerosols' published 1 October 2003, Sheinson, R.J. and Fleming J.W. disclose the use of optical diagnostic techniques for measuring particle and gas stream velocities of powdered aerosols. They also disclose a powder delivery system capable of controlling the delivery of small amounts of small particle size powder samples.

### SUMMARY

Viewed from a first aspect, the present invention provides a system comprising: a powderizer calibration column for calibrating a sensor head of a sensor system for measuring an aerosol cloud fire suppression agent comprising: an observation tube that defines a cylindrical cross-section diameter, said observation tube being at least twenty of said diameters in length; a test section in fluid communication with said observation tube configured for inserting a sensor head; a powder capture box in fluid communication with said observation tube; a powder feeder system configured to communicate a dry powder agent into said observation tube opposite said powder capture box at a defined rate; and an inert gas distribution system configured to communicate an inert gas into said observation tube opposite said powder capture box at a defined rate; wherein said observation tube and powder capture box are defined along an axis (Z); and said powder capture box defines a relatively large volume compared to said observation tube to prevent recirculation of a dry powder agent back into said test section.

Viewed from a second aspect, the present invention provides a system for measuring an aerosol cloud fire suppression agent comprising: a powderizer calibration column according to the first aspect; a sensor system which includes at least one sensor head for measuring light transmission through the cloud within said powderizer calibration column; and a control system in communication with said sensor system.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:

Figure 1 is a schematic view of a measurement system with a powderizer calibration column (PCC) for a dry powder agent;

Figure 2 is a schematic view of a sensor system for a powder based chemical fire suppressant agent installed in a representative protected structure;

Figure 3A is a schematic view of a powderizer calibration column (PCC) for a dry powder agent;

Figure 3B is a schematic view of a powder feeder system and a gas distribution system for communication with the powderizer calibration column (PCC);

Figure 3C is a perspective view of a sensor head within the powderizer calibration column (PCC);

Figure 4A is an exploded view of a sensor head for a dry powder agent;

Figure 4B is an expanded view of a sensor head in communication with a control system;

Figure 4C is a perspective view of one embodiment of a sensor head for a dry powder agent;

Figure 4D is a longitudinal sectional view of the sensor head body of Figure 4C;

Figure 4E is a perspective view of another embodiment of a sensor head for a dry powder agent;

Figure 5 is a schematic view of a sensor head sensing volume;

Figure 6 is a schematic view of a sensor head sensing volume with possible light paths without multiple reflection;

Figure 7 is an empirical relationship between mass density concentration and light transmittance for a dry powder agent;

Figure 8 is a flow chart illustrating calibration of the measurement system to determine an empirical relationship between mass density concentration and transmittance for a desired dry powder agent such as an aerosol cloud fire suppression agent; and

Figure 9 is a flow chart illustrating operation of the sensor heads located within a protected structure test fixture such as the representative engine nacelle.

## DETAILED DESCRIPTION

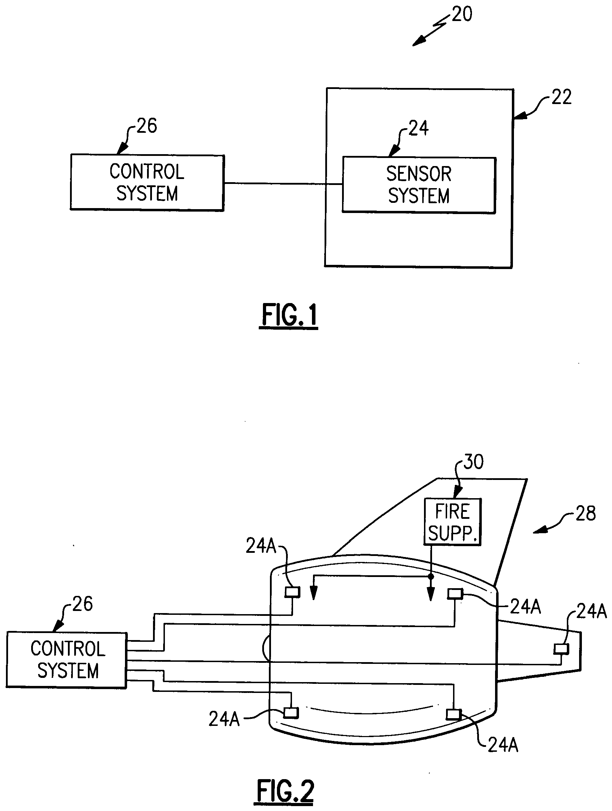

Figure 1 schematically illustrates a measurement system 20 for the measurement of dry powder agent based chemical fire suppressant agents. The system 20 generally includes a powder calibration column (PCC) 22, a sensor system 24, and a control system 26. The PCC 22 generally is utilized to calibrate a sensor of the sensor system 24 which later may then be installed in a protected structure test fixture 28 such as an engine nacelle (Figure 2). It should be understood that the engine nacelle is but one representative structure in one non-limiting embodiment, within which a powder based chemical fire suppressant system 30 may be installed and that other protected structures 28 such as a land vehicle engine compartment, cabin or other structure will also benefit herefrom.

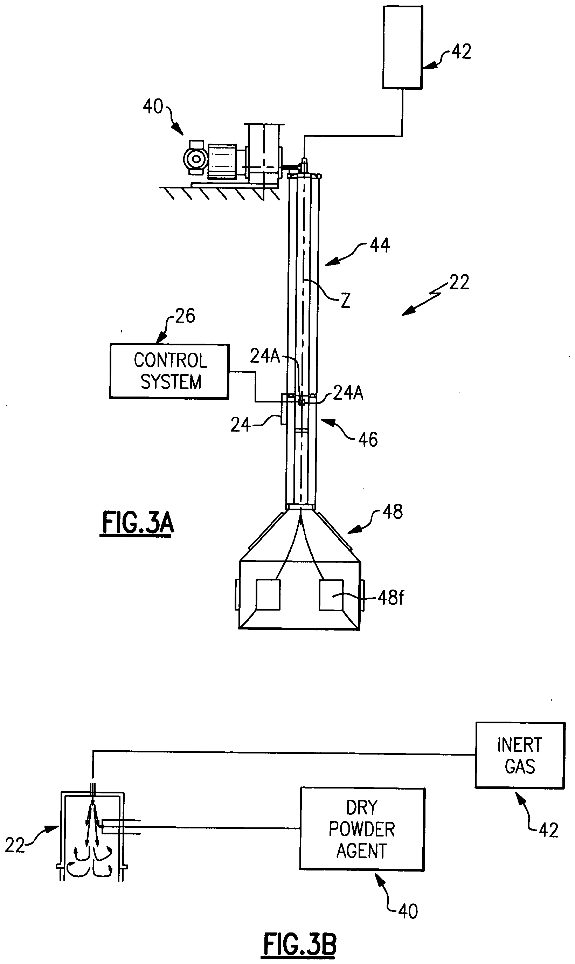

Referring to Figure 3A, the PCC 22 generally includes a powder feeder system 40, a gas distribution system 42, an observation tube 44, a test section 46 within which at least one sensor head 24A, sometimes referred to as a powderizer, is mounted, and a powder capture box 48. The observation tube 44, test section 46 and powder capture box 48 are defined along an axis Z. The observation tube 44 which defines the test section 46 in one non-limiting embodiment is at least twenty diameters in length prior to the at least one sensor head 24A to ensure homogeneous distribution of the powder agent from the powder feeder system 40 and the inert gas from the gas distribution system 42. This facilitates a direct measurement of light transmission through the aerosol cloud by the sensor head 24A.

The powder feeder system 40 in one non-limiting embodiment includes an auger such as that manufactured by Acrison, Inc. of Moonachie, NJ, USA. The powder feeder system 40 defines the rate at which the dry powder agent is communicated into the observation tube 44.

The gas distribution system 42 communicates the inert gas which, in one non-limiting embodiment, includes nitrogen to break up and fully disperse the dry powder agent. The gas distribution system 42 is located generally above the powder feeder system 40 and transverse thereto (Figure 3B). The gas distribution system 42 defines the rate at which the inert gas is communicated into the observation tube 44 such that a known flow of dry powder agent and inert gas are received in the sensor head 24A so that a relationship may be determined between the dry powder agent concentration and light transmission. This allows for absolute known rates of dry powder agent feed and inert gas.

The powder capture box 48 provides a relatively large volume to prevent recirculation of the powder agent back into the test section 46. The powder capture box 48 also prevents pressure build up and prevents back flow of the dry powder agent aerosol cloud facilitated by airflow outflow through filters 48F.

The PCC 22 is utilized to calibrate the sensor head 24A light transmission measurement with respect to a concentration of aerosol cloud in mass per volume. The cylindrical cross section of the PCC 22 reduces corner effects and other geometric effects. The dry powder agent is communicated into the observation tube 44 just below the inert gas introduction (Figure 3B). The high velocity jet of inert gas passes the powder feeder system 40 to cause turbulent mixing of the dry powder agent into the inert gas flow to generate an aerosol cloud as would be typical in an aerosol cloud fire suppression agent. The process which communicates the dry powder agent into the jet of inert gas causes the dry powder agent agglomerates to break up into the principal particles. The particles mixed with the inert gas create the dry powder agent aerosol cloud.

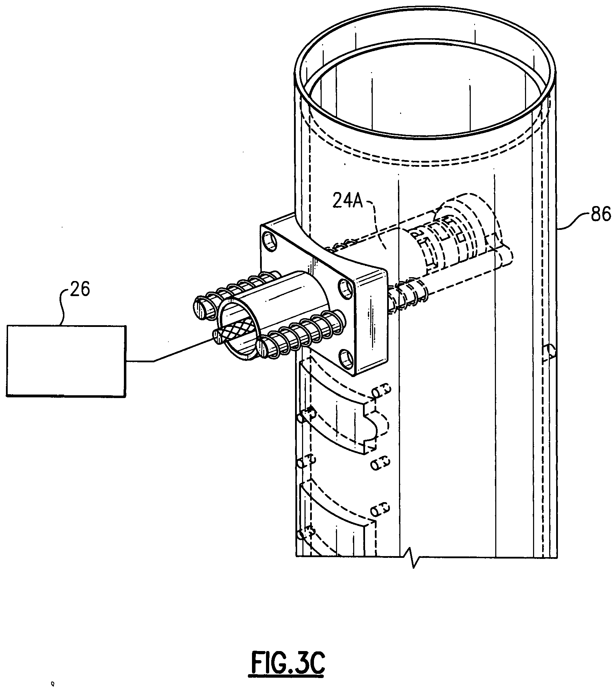

The aerosol cloud travels downward with gravity in the observation tube 44 to facilitate homogeneous mixing of the aerosol cloud for measurement by the sensor head 24 (Figure 3C). The downward flow is necessary because different sized particles of the dry powder agent travel at different velocities. Downward flow at steady conditions results in a steady-state concentration over time as the concentration of each particle size stays constant downstream to allow an accurate measurement by the sensor system 24.

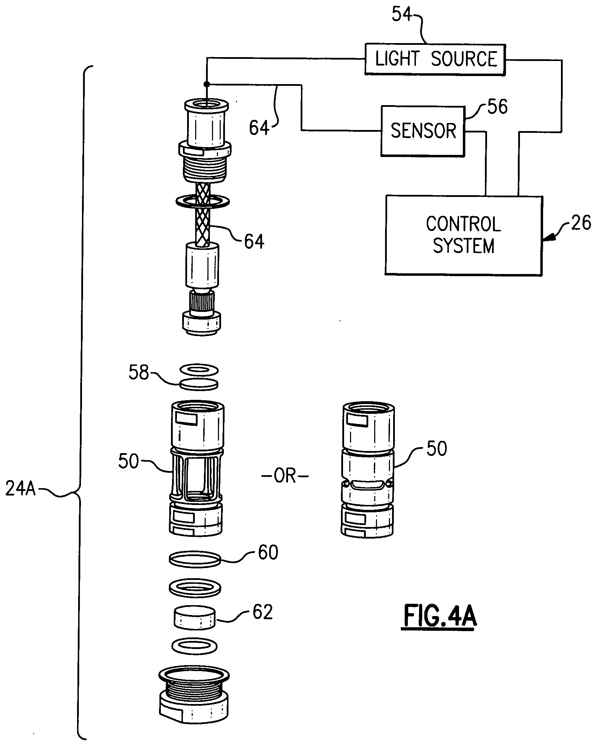

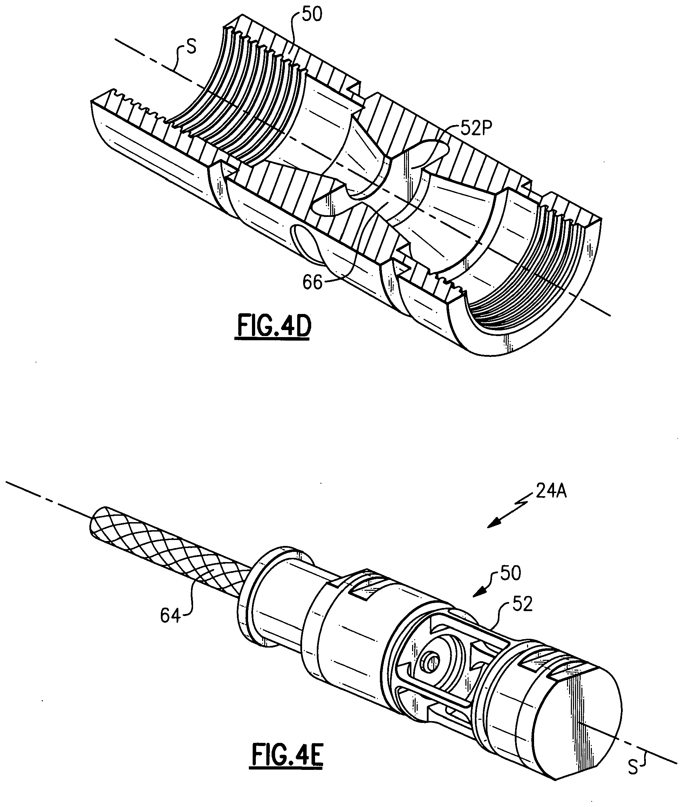

Referring to Figures 4A-4D, one non-limiting embodiment of the sensor head 24A provides for a light transmission measurement through the dry powder agent aerosol cloud. Each sensor head 24A includes a housing 50 defined along an axis S though which light is communicated along a light path. The housing defines an aperture 52 transverse to the axis S, a light source 54, a detector 56, a window 58, a mirror window 60 and a mirror 62 (Figure 4D). The light source 54 in one non-limiting embodiment is a red light emitting diode (LED) operating at 650 nm and the detector 56 is a visible spectrum photodiode.

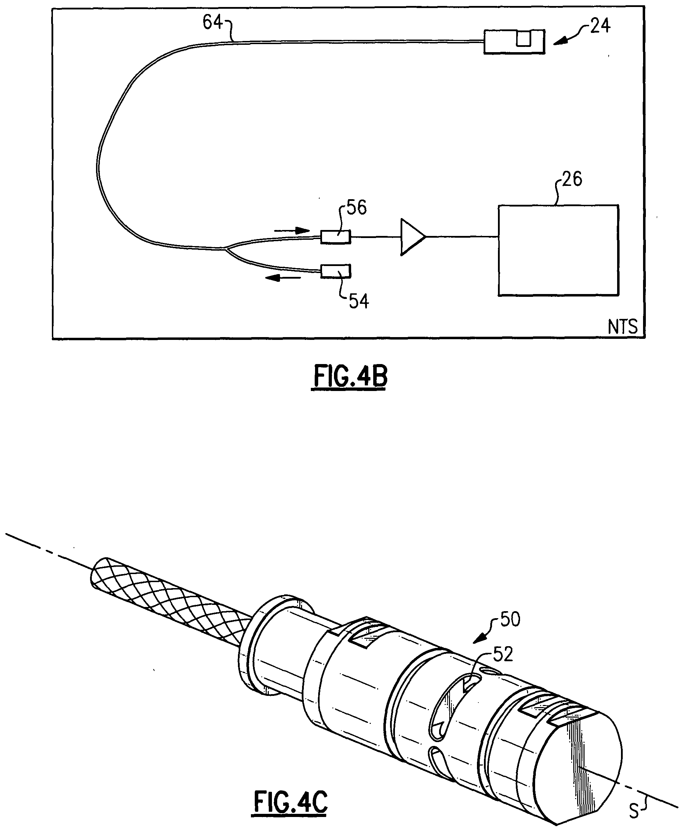

Each sensor head 24A operates on light obscuration principles. Light is communicated from the light source 54 along a fiber optic cable 64, passes through the transparent window 58, enters a measurement volume 66 (Figure 4B) in communication with the aperture 52, reflects off the mirror 62 and is communicated through the fiber optic cable 64 (Figure 4B). The window 58 is generally opposite the mirror 62 such that the light passes through the measurement volume 66 twice - from window 58 through measurement volume 66, reflects off mirror 62 then through measurement volume 66 and into the detector 56 via window 58 and the fiber optic cable. The detector 56 outputs an analog signal proportional to the intensity of light to the control system 26. The intensity of light changes functionally to the concentration of dry powder agent particles in the measurement volume 66. The sensor head 24A is unlike thermocouples, pressure transducers, strain gauges or other instrumentation where signal strength is directly related to the phenomena being measured.

Each sensor head 24A of the sensor system 24 is in communication with the control system 26 which initiates operation of the system 20 and controls the data acquisition from the sensor head 24A. Data in one non-limiting embodiment is acquired at a variable frequency of 1 to 1000 Hz for a maximum of 30,000 total points. The maximum acquisition time is 30,000 divided by the acquisition rate (300 seconds in the case of 100 Hz). It should be understood that alternative data acquisition rates may be utilized by the control system 26.

It should be noted that a computing device can be used to implement various functionality, such as that attributable to the control system 26. In terms of hardware architecture, such a computing device may include a processor, memory, and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as controllers, buffers (caches), drivers, repeaters, and detectors to enable communications. Further, the local interface may include address, control, and/or data connections to enable appropriate communications among the aforementioned components.

The processor may be a hardware device for executing software, particularly software stored in memory. The processor can be a custom made or commercially available processor, a central processing unit (CPU), an auxiliary processor among several processors associated with the computing device, a semiconductor based microprocessor (in the form of a microchip or chip set) or generally any device for executing software instructions.

The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. Note that the memory can also have a distributed architecture, where various components are situated remotely from one another, but can be accessed by the processor.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The Input/Output devices that may be coupled to system I/O Interface(s) may include input devices, for example but not limited to, a keyboard, mouse, scanner, microphone, camera, proximity device, etc. Further, the Input/Output devices may also include output devices, for example but not limited to, a printer, display, etc. Finally, the Input/Output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

When the computing device is in operation, the processor can be configured to execute software stored within the memory, to communicate data to and from the memory, and to generally control operations of the computing device pursuant to the software. Software in memory, in whole or in part, is read by the processor, perhaps buffered within the processor, and then executed.

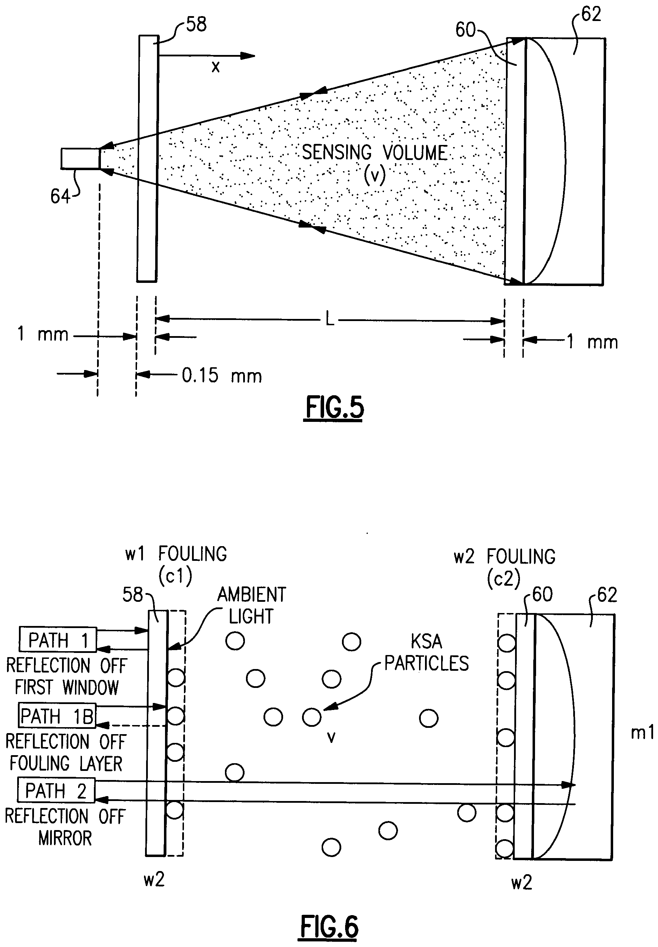

Referring to Figure 5, the sensor head 24A directly measures light transmission though the dry powder agent aerosol cloud, which can be directly related to a spatial mass density concentration via an empirical or theoretical relationship.

The dry powder agent aerosol cloud enters the measurement volume 66 and passes through the light that travels from the fiber optic cable 64 to the mirror 62 and back to the detector 56. As the dry powder agent aerosol cloud passes through the light, the total light transmitted decreases proportional to the concentration of the aerosol cloud. The mirror is concaved and focuses the light back to the fiber optic cable 54.

Referring to Figure 6, representative paths for the light are schematically illustrated. Reflections off of objects beyond the first fouling layer have been ignored due to the insignificant amount of light return. The intensity of light received by the detector 56 is the sum of Paths 1, 1B, 2, and the stray light from the background. In Path 1 some fraction of the reflected light off the window 58 is received. Path 1B occurs if a fouling layer exists on window 58 and must transmit through window 58 twice.

In Path 2, the light must be transmitted twice through each window 58, 60, each fouling layer, the measurement volume 66 then reflects off the mirror 62. The mirror 62 is assumed to reflect all light in these calculations. Both windows 58, 60 have the same properties.

Without a fouling layer, the sensor head 24A output can be expressed as:

$$I = f_{w1}\rho_w I_s + \tau_w{}^4 \tau_{c1}{}^2 \tau_v{}^2 \tau_{c2}{}^2 I_s + I_\infty \qquad \text{Equation 1}$$

Prior to a test, the blocked output can be measured setting $\tau v$ to 0 by blocking the mirror 62 with non-reflective media such that only the light reflected off window 58 and ambient light are measured.

$$I_{bl} = f_{w1}\rho_w I_s + I_\infty \qquad \text{Equation 2}$$

The reference value is found when $\tau v$ is 1, i.e. no aerosol cloud is in the measurement volume and light is allowed to reflect off the mirror back to the source. Substituting in for the measured blocked value:

$$I_{ref} = \tau_w{}^4 \tau_{c1}{}^2 \tau_{c2}{}^2 I_s + I_{bl} \qquad \text{Equation 3}$$

By substituting Equation 3 and Equation 2 into Equation 1, the double pass transmittance through the sensing volume during a test can be expressed:

$$\tau_v{}^2 = \frac{I - I_{bl}}{I_{ref} - I_{bl}} \qquad \text{Equation 4}$$

At this point, it is convenient to define a modified sensor head 24A output with the blocked value subtracted off as the blocked value is assumed constant throughout the entire measurement.

$$I^* \equiv I - I_{bl} \qquad \text{Equation 5}$$

Equation 4 can be re-expressed:

$$\tau_v{}^2 = \frac{I^*}{I_{ref}^*} \qquad \text{Equation 6}$$

Mass Density Concentration - Theoretical Relationship

The relationship of light transmission to concentration of particles in a dispersed cloud is given by

$$\frac{di}{dx} = -n_v{}^m A_s i \qquad \text{Equation 7}$$

Beers' Law, squared here to give the double path transmittance, is a solution to Equation 7 where only the light intensity varies with distance.

$$\tau_v^{\ 2} \equiv \left(\frac{i}{i_i}\right)^2 = \exp\left(-2n_v''' A_s L\right)$$

Equation 8

Equation 8 can be solved for the number density concentration, when multiplied by the mass of one particle the mass density concentration in the sensing volume is found.

$$m_v''' = \frac{1}{2L}\frac{V_p}{A_s}\rho_s \ln\left(\frac{1}{\tau_v^{\ 2}}\right)$$

Equation 9

The transmission through the sensing volume term is squared because the light travels through the measurement volume 66 twice. Mie Theory identifies the scattering cross sectional area as approaching twice the particle cross sectional area, as the size of the particle increases from three times the wavelength of light. In this example, the average particle diameter is above 3 $\mu$m where the wavelength of the light is 0.65 $\mu$m. Because the surface area and the mass of the individual particles are of interest, the Sauter Mean diameter is used. This is the diameter of a particle with the same surface area to mass (volume) ratio as the entire aerosol cloud population. Equation 9 reduces to a function of the Sauter Mean diameter:

$$m_v''' = \frac{1}{3}\frac{d_{[3,2]}}{2L}\rho_s \ln\left(\frac{1}{\tau_v^{\ 2}}\right)$$

Equation 10

Equation 10 yields a theoretical relationship between the mass density concentration and the transmission if the particle diameter has been characterized. However, this relationship is only valid at high transmissions.

Since the powderizer will measure transmissions less than that valid in Equation 9, the PCC is utilized to derive an empirical relationship between transmission and spatial mass density concentration.

The experiments were conducted in the PCC 22 (Figure 3A) which provides for constant flows of the dry powder agent and the inert gas. This provides for fully developed flow so that the dry powder agent aerosol cloud is evenly distributed across the observation tube 44 cross section. The fully mixed dry powder agent aerosol cloud then passes by the sensor head 24A where light transmission is measured. By varying the flow rate of inert gas and the feed rate of the dry powder agent, a variety of mass density concentrations could be tested.

The relationship between a transmission and spatial mass density concentration as determined in the PCC is specific to the sensor head 24A design and the dry powder composition and size. If any of these change, a new relationship may be determined.

The measurement error can be found from the scatter in the transmission to spatial mass density concentration data. For the sensor head 24 in Figure 4C, the error was found to be +/- 16 g/m^3. This error would be specific to the sensor head 24 design and the dry powder composition and size.

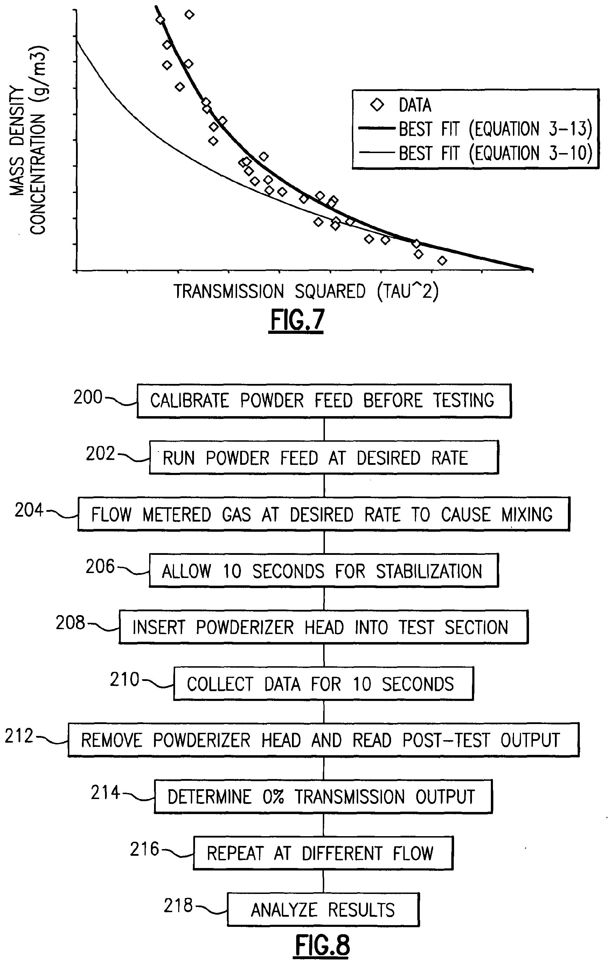

Referring to Figure 8, an operational example of the PCC 20 is illustrated in which the measurement system 20 is operated to determine an empirical relationship between mass density concentration and transmittance for a desired dry powder agent such as an aerosol cloud fire suppression agent (Figure 7).

In step 200, the powder feeder system 40 is calibrated to a desired dry powder agent rate. The powder feeder system 40 is then operated at the desired dry powder agent rate (g/sec) (step 202) as the gas distribution system 42 is operated at a desired inert gas rate (m3/sec) (step 204) to provide an aerosol cloud mix. A time period is then allowed for stabilization of the aerosol cloud (step 206). The desired dry powder agent rate may include, in one example, from <10 g/m3 to >300 g/m3 which may be obtained by varying auger feed rates and flow rates. The desired inert gas rate may include, in one example, bulk velocities from ~0.5 m/sec to ~3.5 m/sec with centerline velocity about 35% greater than bulk velocity.

A sensor head 24A is then inserted into the test section 46 of the PCC 22 (step 208). Data is collected from the sensor head 24A for a predetermined time period (step 210) then the sensor head 24A is removed (step 212). A zero percentage transmission in the PCC 20 from the sensor head 24A is then determined by blocking all light into the sensor head 24A with, for example, a black rubber plug (step 214). Steps 202-214 are then repeated a multiple of times to obtain data points for a curve which represents the empirical relationship between mass density concentration and transmission squared for the desired dry powder agent (Step 218; Figure 7).

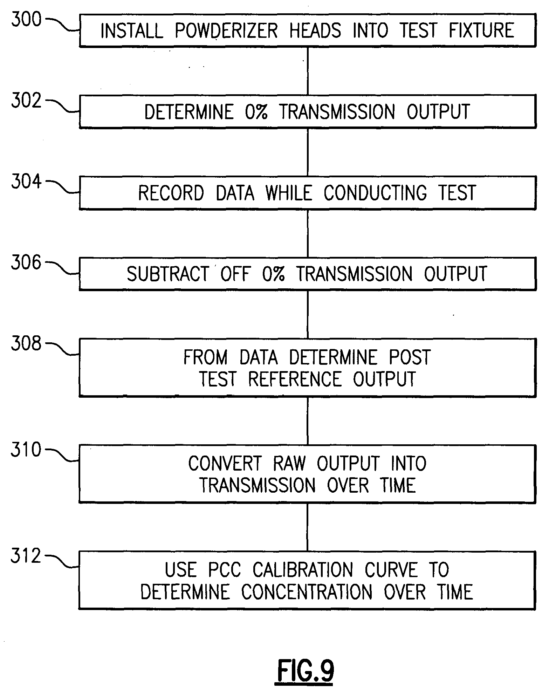

Referring to Figure 9, once the empirical relationship between mass density concentration and light transmittance for the desired dry powder agent (Figure 7) is determined, one or more sensor heads 24 may be located within a protected structure test fixture 28 such as the representative engine nacelle (Figure 2).

In step 300, the sensor heads 24 are installed within the desired protected structure test fixture 28. A reference zero percent transmission output is determined for each sensor head 24A (step 302). That is, the difference between the zero percentage transmission in the PCC 20 and the desired protected structure test fixture 28 is determined. The aerosol cloud fire suppression agent is then activated within the protected structure test fixture 28 and data from each sensor head 24A is recorded by the control system 26 during the test (step 304). The reference zero percent transmission output is subtracted for each sensor head 24A (step 306) to determine post test reference raw output (step 308) and convert that raw output into a light transmittance over time (step 310). The sensor head is relatively small so as to be located in a remote compartment so as to measure the light transmittance of the aerosol cloud with respect to time. The light transmittance over time is then utilized with the empirical relationship between mass density concentration and transmittance for the desired dry powder agent (Figure 7) to determine concentration over time (step 312).

Table 2

| Nomenclature | | |
|---|---|---|
| Symbol | Description | Units |
| $A_s$ | Scattering cross sectional area of a particle | m2 |
| $d$ | Diameter | m |
| $f$ | Fraction | - |
| $i$ | Intensity | lux |
| $I$ | Sensor head 24A output | Volts |
| $L$ | Path length of light | m |
| $m$ | Mass | kg |
| $n$ | Number | - |
| $V$ | Volume | m3 |
| $x$ | Dimensional displacement | m |
| | | |
| $\rho$ | Density | g/m3 |
| $\rho_w$ | Window reflection | - |
| $\tau$ | Transmission | - |

| Nomenclature | |
|---|---|
| Subscript | Description |
| $\infty$ | Ambient |
| [3,2] | Sauter mean |
| $bl$ | Blocked |
| $c$ | Fouling layer |
| $i$ | Initial |
| $p$ | Particle |
| $ref$ | Reference |
| $s$ | Source, Solid, or Scattering |
| $v$ | Sensing volume |
| $w$ | Window |

(continued)

| Superscript | Description | Units |
|---|---|---|
| ''' | Per volume (density concentration) | 1/m3 |
| * | Modified sensor head 24A output (blocked output subtracted off) | |

It should be understood that relative positional terms such as "forward," "aft," "upper," "lower," "above," "below," and the like are with reference to the normal operational attitude of the vehicle and should not be considered otherwise limiting.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

**Claims**

1. A powderizer calibration column (22) for calibrating a sensor head (24A) of a sensor system (24) for measuring an aerosol cloud fire suppression agent comprising:

   an observation tube (44) that defines a cylindrical cross-section diameter, said observation tube being at least twenty of said diameters in length;
   a test section (46) in fluid communication with said observation tube configured for inserting a sensor head (24A);
   a powder capture box (48) in fluid communication with said observation tube;
   a powder feeder system (40) configured to communicate a dry powder agent into said observation tube opposite said powder capture box at a defined rate; and
   an inert gas distribution system (42) configured to communicate an inert gas into said observation tube opposite said powder capture box at a defined rate;
   wherein
   said observation tube and powder capture box are defined along an axis (Z); and
   said powder capture box defines a relatively large volume compared to said observation tube to prevent recirculation of a dry powder agent back into said test section.

2. The apparatus as recited in claim 1, configured to communicate said dry powder agent and said inert gas into said observation tube generally along an axis (Z) along a length of said observation tube.

3. The apparatus as recited in claim 2, configured to communicate said inert gas into said dry powder agent.

4. The apparatus as recited in claim 2, configured to communicate said dry powder agent into a jet of said inert gas to cause dry powder agent agglomerates to break up into principal particles to form an aerosol cloud.

5. The apparatus as recited in claim 1, 2, 3 or 4, wherein said powder feeder system includes an auger.

6. A system (20) for measuring an aerosol cloud fire suppression agent comprising:

   a powderizer calibration column (22) according to claim 1;
   a sensor system (24) which includes at least one sensor head (24A) for measuring light transmission through the cloud within said powderizer calibration column; and
   a control system (26) in communication with said sensor system.

**7.** The system as recited in claim 6, wherein said at least one sensor head (24A) is located within a test section (46) of said powderizer calibration column.

**8.** The system as recited in claim 7, wherein said test section is immediately upstream of a powder capture box (48).

**9.** The system as recited in claim 7 or 8, wherein said at least one sensor head (24A) is operable to provide a direct measurement of light transmission within said test section to said control system.

**Patentansprüche**

**1.** Pulverisierer-Kalibriersäule (22) zum Kalibrieren eines Sensorkopfes (24A) eines Sensorsystems (24) zum Messen eines Aerosolwolken-Feuerunterdrückungsmittels, umfassend:

ein Beobachtungsrohr (44), das einen Durchmesser mit zylindrischem Querschnitt definiert, wobei das Beobachtungsrohr mindestens zwanzig der Durchmesser in der Länge beträgt;
einen Testabschnitt (46) in Fluidverbindung mit dem Beobachtungsrohr, konfiguriert zum Einsetzen eines Sensorkopfes (24A);
einen Pulvereinfangkasten (48) in Fluidverbindung mit dem Beobachtungsrohr;
ein Pulverzufuhrsystem (40), konfiguriert, um ein Trockenpulvermittel mit einer definierten Rate in das Beobachtungsrohr gegenüber dem Pulvereinfangkasten zu übertragen; und
ein Inertgasverteilungssystem (42), konfiguriert, um ein Inertgas mit einer definierten Rate in das Beobachtungsrohr gegenüber dem Pulvereinfangkasten zu übertragen;
wobei
das Beobachtungsrohr und der Pulvereinfangkasten entlang einer Achse (Z) definiert sind; und
der Pulvereinfangkasten ein relativ großes Volumen verglichen mit dem Beobachtungsrohr definiert, um eine Rückführung eines Trockenpulvermittels zurück in den Testabschnitt zu verhindern.

**2.** Vorrichtung nach Anspruch 1, konfiguriert, um das Trockenpulvermittel und das Inertgas im Allgemeinen entlang einer Achse (Z) entlang einer Länge des Beobachtungsrohres in das Beobachtungsrohr zu übertragen.

**3.** Vorrichtung nach Anspruch 2, konfiguriert, um das Inertgas in das Trockenpulvermittel zu übertragen.

**4.** Vorrichtung nach Anspruch 2, konfiguriert, um das Trockenpulvermittel in einen Strahl des Inertgases zu übertragen, um zu bewirken, dass sich Trockenpulvermittelagglomerate zu Hauptpartikeln zerlegen, um eine Aerosolwolke zu bilden.

**5.** Vorrichtung nach Anspruch 1, 2, 3 oder 4, wobei das Pulverzufuhrsystem eine Förderschnecke aufweist.

**6.** System (20) zum Messen eines Aerosolwolken-Feuerunterdrückungsmittels, umfassend:

eine Pulverisierer-Kalibriersäule (22) nach Anspruch 1;
ein Sensorsystem (24), das mindestens einen Sensorkopf (24A) zum Messen der Lichtdurchlässigkeit durch die Wolke innerhalb der Pulverisierer-Kalibriersäule umfasst; und
ein Steuersystem (26) in Verbindung mit dem Sensorsystem.

**7.** System nach Anspruch 6, wobei sich der mindestens eine Sensorkopf (24A) innerhalb eines Testabschnitts (46) der Pulverisierer-Kalibriersäule befindet.

**8.** System nach Anspruch 7, wobei der Testabschnitt unmittelbar stromaufwärts von einem Pulvereinfangkasten (48) angeordnet ist.

**9.** System nach Anspruch 7 oder 8, wobei der mindestens eine Sensorkopf (24A) betreibbar ist, um eine direkte Messung der Lichtdurchlässigkeit innerhalb des Testabschnitts für das Steuersystem bereitzustellen.

**Revendications**

1. Colonne de calibration de pulvérisateur (22) pour la calibration d'une tête de capteur (24A) d'un système de capteur (24) pour mesurer un agent de suppression d'un incendie de nuage d'aérosol, comprenant :

   un tube d'observation (44) qui définit un diamètre en coupe transversale cylindrique, ledit tube d'observation étant au moins de vingt desdits diamètres en longueur ;
   une section de test (46) en communication fluide avec ledit tube d'observation conçue pour insérer une tête de capteur (24A) ;
   une boîte de capture de poudre (48) en communication fluide avec ledit tube d'observation ;
   un système d'alimentation en poudre (40) conçu pour communiquer un agent en poudre sèche dans ledit tube d'observation à l'opposé de ladite boîte de capture de poudre à une vitesse définie ; et
   un système de distribution de gaz inerte (42) conçu pour communiquer un gaz inerte dans ledit tube d'observation à l'opposé de ladite boîte de capture de poudre à une vitesse définie ;
   dans laquelle
   ledit tube d'observation et ladite boîte de capture de poudre sont définis selon un axe (Z) ; et
   ladite boîte de capture de poudre définit un volume relativement grand en comparaison audit tube d'observation pour empêcher la recirculation d'un agent en poudre sèche vers l'arrière dans ladite section de test.

2. Appareil selon la revendication 1, conçu pour communiquer ledit agent en poudre sèche et ledit gaz inerte dans ledit tube d'observation généralement le long d'un axe (Z) le long d'une longueur dudit tube d'observation.

3. Appareil selon la revendication 2, conçu pour communiquer ledit gaz inerte dans ledit agent en poudre sèche.

4. Appareil selon la revendication 2, conçu pour communiquer ledit agent en poudre sèche dans un jet dudit gaz inerte pour entraîner la cassure des agglomérats de l'agent en poudre sèche en particules principales pour former un nuage d'aérosol.

5. Appareil selon la revendication 1, 2, 3 ou 4, dans lequel ledit système d'alimentation en poudre comprend une tarière.

6. Système (20) pour mesurer un agent de suppression d'incendie de nuage d'aérosol, comprenant :

   une colonne de calibration de pulvérisateur (22) selon la revendication 1 ;
   un système de capteur (24) qui comprend au moins une tête de capteur (24A) pour mesurer la transmission de la lumière à travers le nuage à l'intérieur de ladite colonne de calibration de pulvérisateur ; et
   un système de commande (26) en communication avec ledit système de capteur.

7. Système selon la revendication 6, dans lequel ladite au moins une tête de capteur (24A) est située à l'intérieur d'une section de test (46) de ladite colonne de calibration de pulvérisateur.

8. Système selon la revendication 7, dans lequel ladite section de test est immédiatement en amont d'une boîte de capture de poudre (48).

9. Système selon la revendication 7 ou 8, dans lequel ladite au moins une tête de capteur (24A) peut fonctionner pour fournir une mesure directe de la transmission de la lumière à l'intérieur de ladite section de test vers ledit système de commande.

20

26

CONTROL
SYSTEM

24

SENSOR
SYSTEM

22

## FIG.1

30

FIRE
SUPP.

28

24A

24A

24A

26

CONTROL
SYSTEM

24A

24A

## FIG.2

**FIG.3A**

**FIG.3B**

FIG.3C

**FIG.4A**

**FIG.4B**

**FIG.4C**

**FIG.4D**

**FIG.4E**

**FIG.5**

**FIG.6**

MASS DENSITY CONCENTRATION (g/m3)

TRANSMISSION SQUARED (TAU^2)

◇ DATA
── BEST FIT (EQUATION 3-13)
── BEST FIT (EQUATION 3-10)

**FIG.7**

200 — CALIBRATE POWDER FEED BEFORE TESTING

202 — RUN POWDER FEED AT DESIRED RATE

204 — FLOW METERED GAS AT DESIRED RATE TO CAUSE MIXING

206 — ALLOW 10 SECONDS FOR STABILIZATION

208 — INSERT POWDERIZER HEAD INTO TEST SECTION

210 — COLLECT DATA FOR 10 SECONDS

212 — REMOVE POWDERIZER HEAD AND READ POST-TEST OUTPUT

214 — DETERMINE 0% TRANSMISSION OUTPUT

216 — REPEAT AT DIFFERENT FLOW

218 — ANALYZE RESULTS

**FIG.8**

300 — INSTALL POWDERIZER HEADS INTO TEST FIXTURE

302 — DETERMINE 0% TRANSMISSION OUTPUT

304 — RECORD DATA WHILE CONDUCTING TEST

306 — SUBTRACT OFF 0% TRANSMISSION OUTPUT

308 — FROM DATA DETERMINE POST TEST REFERENCE OUTPUT

310 — CONVERT RAW OUTPUT INTO TRANSMISSION OVER TIME

312 — USE PCC CALIBRATION CURVE TO DETERMINE CONCENTRATION OVER TIME

**FIG.9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **SKAGGS, R.R. et al.** *Applied Spectroscopy,* 1999, vol. 53 (9), 1143-1148
- **GANN, R.G.** *NITS SP 890,* 1995, vol. 1
- **SHEINSON, R.J. ; FLEMING J.W.** *Final Technical Report: Suppression effectiveness of aerosols,* 01 October 2003